# EUROPEAN PATENT APPLICATION

(11) **EP 3 569 527 A1**
(43) Date of publication of application: **20.11.2019**
(21) Application number: 18172442.8
(22) Date of filing: 15.05.2018
(51) Int. Cl.: B65G 47/08, B65G 57/22

(54) **PALLETIZING APPARATUS**

(71) Applicant: Avanti Conveyors Ltd, Derbyshire, Derbyshire SK23 7SW (GB)
(72) Inventor: Vanhoutte, Jan, 8810 Lichtervelde (BE); Mander, Simon, Derbyshire, SK23 7SW (GB)
(74) Representative: BiiP cvba

(57) **Abstract**

The present invention discloses a palletizing apparatus, wherein when a pile of plurality of bundles to be stacked is received, the pile is processed and passed towards the layer formation unit such that more than one bundle may be separated and / or accumulated and / or turned simultaneously at the same time in accordance with the desired layer stacking pattern, said apparatus comprising:- a receiving station for receiving the pile of plurality of bundles and connected to a palletizing station; - a plurality of separators arranged and sequentially connected between the receiving station and the palletizing station, said plurality of separating means comprising: a first separator extending towards and between the receiving station and a first side transfer conveyor; a second separator connected to the first separator through a first conveyor mean including at least the first side transfer conveyor; and a third separator connected to the second separator through a second conveyor means extending towards the palletizing station, the second conveyor means comprising a side transfer conveyor and one or more buffer conveyors; - a turntable unit for changing the orientation of one or more separated bundles received thereon, the turn table unit connected to the third separator through a third conveyor mean extending between the third separator and the palletizing station; - a layer formation unit for receiving the one or more separated bundles and forming a desired layer stacking pattern, the layer formation unit extending between the turn table unit and the palletizing station.

## Description

### Field of Invention

The present invention relates generally to a palletizing apparatus. More particularly, the present invention relates to a palletizing apparatus for efficiently separating and / or handling and / or stacking small size articles onto a pallet.

### Background of the Invention

Over the last few decades, there has been considerable efforts for improvising the shipment of products in various industries. Further, in the large-scale production of wrapped or unwrapped products, such as food items, tiles, compact disks (CDS) or other relatively flat products or packages, it is often desirable to arrange groups of individual items packed in boxes and then stacked on a pallet.

Manufacturing of such boxes involves a number of steps. A general process for manufacturing such boxes involves manufacturing of flat sheets of corrugated board, cutting products such as trays or boxes from one sheet as per the desired pattern, separating stacks of individual bundles of the products. When large numbers of boxes must be transported in large quantities to another location, the boxes may be arranged in a tight grouping, or array thereof. Each array of boxes can form a layer that can be stacked on a pallet.

Palletizing apparatus are well known in the prior art and are utilized in various industries for building stacks of articles into a compact arrangement for shipping. More recently, the palletizing operation is becoming increasingly automated in manufacturing facilities, wherein articles are transferred onto a pallet using various transfer mechanism such as conveyor means, robots, and the like. These apparatuses generally receive a stream of articles from a die-cutter, form them into rows, orient them properly, group the rows into layers and deposit the layers sequentially on a pallet. For example, various US Patents such as for example, U.S. Pat. Nos. 2,699,264; 2,997,187; 4,255,074; 4,352,616 and 5,139,388 all disclose systems for forming stacks of articles in the form of multi-article layers placed one atop another. In each of the foregoing patents, the individual articles are first formed in rows and a plurality of rows are then assembled to form a layer. These layers are thereafter sequentially placed atop a pallet or previously deposited layer.

Prior palletizers of this type have been used to palletize boxes of different sizes but the smallest size that could be palletized is of approximately 280x280 mm. Recently, in view of an evolution in the industry to produce ever smaller boxes such as for example of the size 140x140mm, the focus has greatly been shifted towards apparatus for separating and palletizing small boxes. However, conventional palletizing apparatus are not suitably able to handle such small size for various reasons. Firstly, these small sizes of boxes to be palletized are not suitably applicable for conventional palletizing apparatus having general conveyor width of 2000mm and more. Further, a reduced size of boxes results in increased number of bundles to be processed which in turn requires a large amount of work per hour and thereby reducing the overall capacity of the palletizing apparatus. If however, the apparatus is customized according to the reduced sizes, it becomes highly cost inefficient. Accordingly, recently, there has been significant efforts going on to develop palletizing apparatus which can efficiently be utilized for small sizes boxes as well as large size boxes.

Currently, such small size boxes are handled by manufacturers within the conventional palletizing apparatus wherein initially, boxes having size double of the required size are prepared which are then sent to cheap labor for manual separation and stacking onto the pallet. Such manual process, however, is highly inefficient, labor intensive and costly. Further, these methods cannot be used to prepare overlapping pattern and thus generally are utilized to prepare column pattern where all the layers to be stacked are placed in a straight column. Additionally, the stacked patters prepared using such process generally possess low and varying quality.

In some alternate solutions, conventional palletizer along with one or more side transfer and one or more separators were utilized. In such solutions, the stacks were first separated into rows and then using side transfer fed into the second separator such that the individual bundles were formed only just before the layer formation, thereby avoiding the problem of limited conveyor pitch and still preparing stacks of small boxes. These solutions however were only applicable for column stacking and were not suitable when there was a need of preparing overlapping patterned layers. In such instances each single box had to be separated, oriented singly and then transferred to the layer formation unit. Accordingly, the process becomes very slow and there is an inevitable delay in formation of overlapping patterned layer and stacking thereof.

Accordingly, there exists a need in art for an improved palletizing apparatus that may quickly, efficiently, cost-effectively and automatically palletize large boxes as well as small boxes in any desired pattern including column pattern as well as overlapping pattern.

### Summary of the Invention

In one aspect of the present disclosure, a palletizing apparatus is disclosed, wherein when a pile of plurality of bundles to be stacked is received, the pile is processed and passed towards the layer formation unit such that more than one bundle may be separated and / or accumulated and / or turned simultaneously at the same time in accordance with the desired layer stacking pattern, said apparatus comprising:
- a receiving station for receiving the pile of plurality of bundles and connected to a palletizing station;
- a plurality of separators arranged and sequentially connected between the receiving station and the palletizing station, said plurality of separating means comprising: a first separator extending towards and between the receiving station and a first side transfer conveyor; a second separator connected to the first separator through a first conveyor mean including at least the first side transfer conveyor; and a third separator connected to the second separator through a second conveyor means extending towards the palletizing station, the second conveyor means comprising a side transfer conveyor and one or more buffer conveyors;
- a turntable unit for changing the orientation of one or more separated bundles received thereon, the turn table unit connected to the third separator through a third conveyor mean extending between the third separator and the palletizing station;
- a layer formation unit for receiving the one or more separated bundles and forming a desired layer stacking pattern, the layer formation unit extending between the turn table unit and the palletizing station.

Additionally, the second conveyor means includes one or more buffer conveyor extending between the second separator and the third separator.

Preferably, the palletizing apparatus further includes a first separator extending towards and between the receiving station and the first side transfer conveyor.

Optionally, the side transfer conveyor may be a double side transfer conveyor.

Further, optionally, at least one of the plurality of separators is configured to not to perform the separating operation. In a particular case, the separator configured to not to perform the separating operation is the first separator.

Generally, the receiving station is a station connected to a die cutter, preferably, a flatbed die cutter, for receiving a pile of bundles formed there through.

Further, the palletizing station is having a layer loading unit for loading the patterned bundle onto the pallet.

Preferably, the first conveyor means, the second conveyor means, and the third conveyor mean is an automatic conveyor having a receiving portion separated from a discharge portion through a narrow conveying belt.

Potentially, the palletizing apparatus includes a control unit for remotely controlling the operations / stacking / alignment of the layers to be stacked.

Further potentially, the control unit includes a data capturing unit for tracking the location of a feed; a processor unit for processing the data received and an instructor unit for delivering handling/operation instructions to the palletizing system

In another aspect of the present disclosure, a method for stacking layer of bundles onto a pallet using a palletization apparatus of the current disclosure. The method includes receiving one or more pile of bundles to be stacked at the receiving station of the palletizing apparatus. The method further includes processing the pile of bundle to form one or more layers of a desired pattern such that more than one bundle may be processed simultaneously at the same time. Further, the method includes stacking the formed layer onto a pallet at the palletizing station.

Potentially, the step of processing the pile of bundle include separating the pile using one or more of the plurality of separators and / or accumulating on one or more buffer conveyors and / or turning on the turning unit.

Further potentially, the step of processing is performed by a processor of the control unit according to the desired layer pattern to be formed.

Preferably, the method includes a step of aligning the patterned layer using an aligning unit before stacking them onto the pallet.

Optionally, the desired pattern may be a column stacking pattern.

Alternatively, the desired pattern may be an overlapping pattern.

The details of one or more implementations are set forth in the accompanying drawings and the description below. Other aspects, features and advantages of the subject matter disclosed herein will be apparent from the description, the drawings, and the claims.

### Brief Description of drawings

FIG. 1 is a block diagram illustrating a palletizing apparatus, in accordance with the present disclosure;
FIG. 2 illustrates another schematic view of the palletizing apparatus, in accordance with an embodiment of the present disclosure;
FIG. 3 illustrates a schematic view of the plurality of separators, in accordance the present disclosure;
FIG. 4 depicts a flowchart illustrating the steps for stacking the layers using the palletizing apparatus, in accordance with an embodiment of the present disclosure;
FIG. 5 illustrates an exemplary view of the palletizing apparatus for obtaining a column stacking pattern; and
FIG. 6 illustrates an exemplary view of the palletizing apparatus for obtaining an overlapping stacking pattern.
FIG. 7 illustrates an exemplary view of a specific embodiment of the palletizing apparatus of the present invention.

### Detailed Description of the Preferred Embodiments

As required, a schematic, exemplary-only embodiment of the present application is disclosed herein; however, it is to be understood that the disclosed embodiment is merely exemplary of the present disclosure, which may be embodied in various and / or alternative forms. Specific structural and functional details disclosed herein are not to be interpreted as limiting, but merely as a basis for the claims and as a representative basis for teaching one skilled in the art to variously employ the present disclosure in virtually any appropriately detailed structure.

Aspects, advantages and/or other features of the exemplary embodiment of the disclosure will become apparent in view of the following detailed description, which discloses various non-limiting embodiments of the invention. In describing exemplary embodiments, specific terminology is employed for the sake of clarity. However, the embodiments are not intended to be limited to this specific terminology. It is to be understood that each specific portion includes all technical equivalents that operate in a similar manner to accomplish a similar purpose.

Exemplary embodiments may be adapted for many different purposes and are not intended to be limited to the specific exemplary purposes set forth herein. Those skilled in the art would be able to adapt the exemplary-only embodiment of the present disclosure, depending for example, on the intended use of adapted embodiment. Moreover, examples and limitations related therewith brought herein below are intended to be illustrative and not exclusive. Other limitations of the related art will become apparent to those of skill in the art upon a reading of the following specification and a study of the related figures.

The present application discloses a palletizing apparatus for separating and stacking plurality of bundles in a desired layer pattern onto a base pallet or on a bottom sheet. The bundles to be stacked may include any ready for shipment packages / items / object such as _ boxes, trays, piles bundles, or the like of goods / materials, such as dairy products, breweries, or any other kind of end user product. The palletizing apparatus while being fast and efficient, allows the possibility of stacking layers of large bundles as well as small bundles onto the base pallet. Further, the apparatus may be configured to stack the layers into any desired pattern such as including column stacking pattern as well as overlapping stacking pattern. Furthermore, the apparatus may be configured to align the layers being stacked onto the pallet. Such an alignment between the stacked layers avoids possibility of any damage to stacked object during transportation / dispensing / shipment etc. Further, the palletizing apparatus being simple and easy to operate enables the possibility of using the apparatus in existing production plants / converters, or the like. It is to be understood that unless otherwise indicated this invention need not be limited to applications in corrugated boxes / packages. As one of ordinary skill in the art would appreciate, variations of the invention may be applied to other applications such as in industries automobiles, dairy plants, health industry, brewing industry or the like and wherever the stacking of products, generally flat, is required. Moreover, it should be understood that embodiments of the present invention may be applied in combination with existing conveyors / elevators / various stacking tools, and / or machines, to achieve any desired application. It must also be noted that, as used in this specification and the appended claims, the singular forms "a," "an" and "the" include plural referents unless the context clearly dictates otherwise. Thus, for example, the term "a layer" is intended to mean a single layer or a pile of layers, "a connecting mechanism" is intended to mean one or more connecting mechanisms, or a combination thereof.

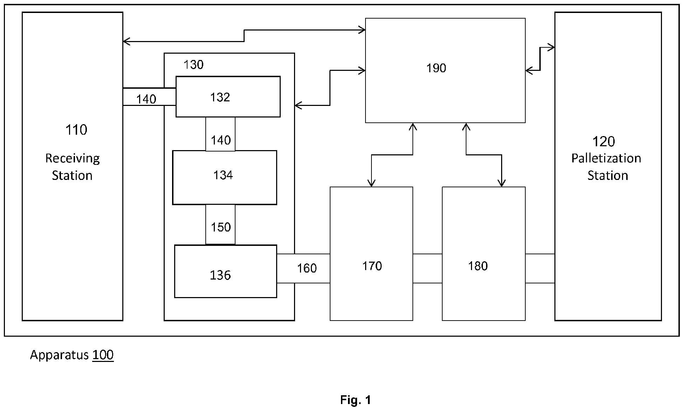

In description of the FIGS. 1 that follow, elements common to the schematic system will have the same number designation unless otherwise noted. In a first embodiment, as illustrated in FIG. 1, the present disclosure provides a palletizing apparatus **100** for separating bundles from a pile received at a receiving station **110** and then stacking layers of bundles onto a base pallet **[not shown]** at a palletizing station **120.** The apparatus **100** includes a plurality of separators **130** for separating the piles of the bundles as they move downstream from the receiving station **110** towards the palletizing station **120** of the palletizing apparatus **100.** The plurality of separators **130** includes a first separator **132** positioned between the receiving station **110** and a first conveyor means **140** including a conveyor belt having at least a side transfer conveyor **[not shown]** connecting a second separator **134** perpendicularly **[not shown]** to the receiving station **110.** The first side transfer (not shown) makes that the first separator **132** is positioned in line with the receiving station **110** and perpendicularly to a second separator **134.** Conveyor mean **140** may comprise a buffer means for accumulating the output of separator **132** before feeding separator **134.** The plurality of separators **130** further includes a third separator **136** connected to the second separator **134** through a second conveyor mean **150.** Alternatively to the side transfer conveyor in **140** which in fact performs a 90° sideways transfer, an inline turntable may be installed which then rotates the separated rows in a horizontal plane over 90° after which the rows are presented to the next separator **134.** The second conveyor mean **150** includes a conveyor belt having a side transfer conveyor **[not shown],** or optionally a double side transfer conveyor, connecting the second separator **134** perpendicularly to the third separator **136.** The second conveyor mean **150** further includes one or more buffer conveyor **[not shown]** for accumulating the output of the second separator **134.** The one or more buffer conveyor may be positioned upstream and / or downstream the side (or double side) transfer conveyor. Optionally second conveyor mean **150** may also include a turntable (not shown) between the second separator and the side (or double side) transfer.

The palletizing apparatus **100** further includes a turning unit **170** downstream the third separator **136,** connected through a third conveyor **160** which in turn connectingly extends towards the palletizing station **120** at the other end. Furthermore, the apparatus 100 include a layer formation unit **180** positioned onto the third conveyor **160** and between the turning unit **170** and the palletizing station **120.** The apparatus furthermore includes a control unit **190** for controlling the operation / handling / of various components such as, the receiving station, the plurality of separators **130,** the first conveyor means **140,** the second conveyor mean **150,** the third conveyor mean **160,** the turning unit **170,** the layer formation unit **180** and the palletizing station **120** of the apparatus **100.**

The first separator **132** simplifies the apparatus **100** in that it provides for an optional separating operation to be performed before the second separator **134** such that separated rows of bundles are perpendicularly feed into the second separator, **134** as desired by the apparatus. Such a requirement of the first separator in accordance with a desired pattern will be discussed later within the current disclosure.

FIGS. 1 schematically shows the arrangement of the basic components of the apparatus of the present disclosure. However, in the construction of commercial functional units, secondary components such as driving means, coupling means, harnesses, support structure and other functional components known to one of skill in the palletizing technology may be incorporated in the apparatus. Such commercial arrangements are included in the present invention as long as the structural components and arrangements disclosed herein are present. In yet other embodiments, the apparatus **100** may include any number of separators as deemed necessary in accordance with the desired pattern and the infeed supply, as deemed possible without deviating from the scope of the current invention.

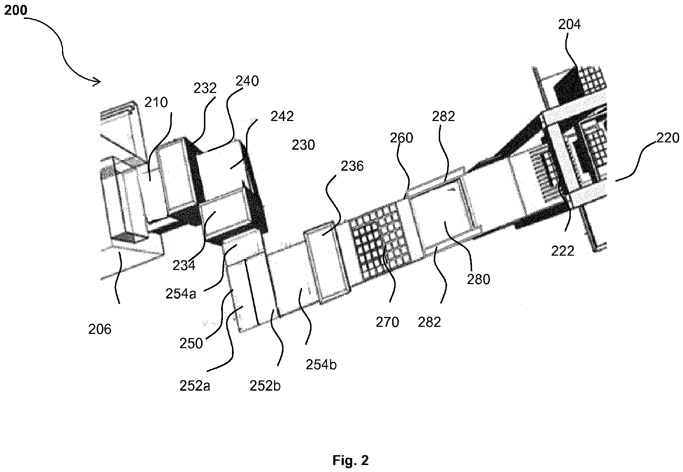

As already disclosed, Figs. 2 illustrates a palletizing apparatus **200** including a receiving station **210** for receiving an input feed i.e. one or more pile of bundles **202** towards a palletizing station **220.** The receiving station **210** is generally an empty infeed portion of a conveyor means connected to the one or more converters **206** of corrugated systems for receiving the one or more piles of bundles **202.** In an embodiment of the present invention, the converter **206** may be a type of a die-cutter such as flat bed die-cutter, or the like. In another embodiment of the invention, the converter **206** providing the input feed to the receiving station **210** may be a rotary diecutter or Flexo Folder Gluer (FFG). In yet another embodiment of the invention, the converter may be any of the converters known in the art.

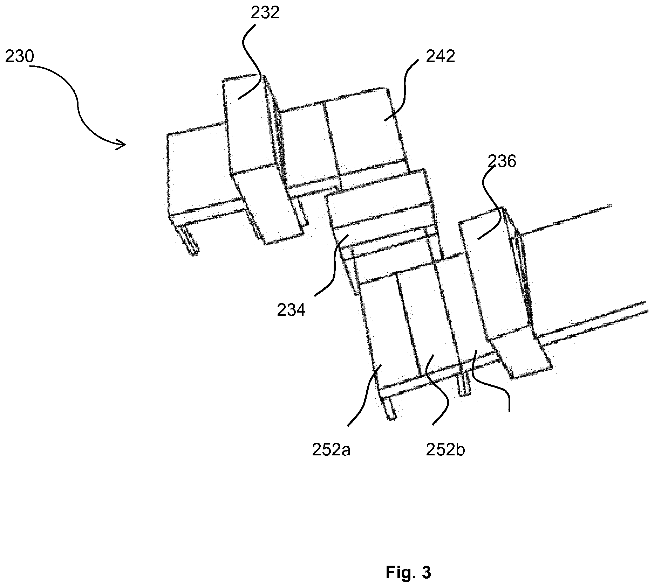

The piles of bundles **202** are to processed and then stacked onto a base pallet or a slip sheet **212** at the palletizing station **210.** The apparatus **100** includes a plurality of separators **230** as illustrated in Fig. 3, for separating the piles of the bundles **202** into rows and / or individual boxes, as they move downstream from the receiving station **210** towards the palletizing station **220.** The plurality of separators **230** includes a first separator **232** connected to the receiving station **210** through a first conveyor mean **240.** The first conveyor means **240** includes a conveyor belt having a side transfer conveyor **242** connecting the second separator **234** generally perpendicularly to the receiving station **210.** The use of side transfer conveyor allows changing the direction of the infeed **202** perpendicularly towards the second separator **234.** The significance of using the side transfer is that when the infeed **202** is passed through the second separator **234,** it separates the piles into one or more rows of bundles which may be suitably be received to an entire conveyor width at the out-feed of the second separator **234.**

The plurality of separators **230** further includes a third separator **236** connected to the second separator **234** through a second conveyor mean **250.** The second conveyor mean **250** includes a conveyor belt having a side transfer conveyor, or optionally a double side conveyer, **252** connecting the second separator **234** generally perpendicularly to the third separator **236.** In case of a double side transfer, this side conveyor **252** may be a combination of two conveyor transfer **252a** and **252b** connected end to end such that each of the single transfer may be suitable to receive a row of bundles out-feed from the second separator **234** simultaneously at the same time as well as sequentially.

Optionally conveyor mean **250** may also include a turntable (not shown) between the second separator and the side (or double side) transfer.

The length of the single transfer **252a,** and **252b** should be such that the combined length thereof should be equal to the out-feed of the second separator **232** thereby allowing possibility of receiving an infeed separately on each of the single transfer **252a** and **252b,** separately, simultaneously and if required sequentially.

Preferably, a length of each such single transfer **252a,** and **252b** is generally half the width of the second separator's **234** out-feed which in turn therefore, allows the separated bundles to be received, one or more separately on each of the single conveyor transfer **252a** and **252b.** However, in other embodiments, the length of the single transfer **252a,** and **252b** may be any length suitable to separately receive out-feed from the second separator simultaneously as well as sequentially.

The second conveyor mean **250** further includes a first buffer conveyor **254a** and / or a second buffer conveyor **254b** for accumulating the rows of the bundles out-feed from the second separator **234.** The first buffer conveyor **254a** may be in line of the second separator **234** and positioned between the second separator **234** and the (double) transfer conveyor **252** such that it accumulates the out-feed from the second separator **234** and delays its movement towards the double transfer conveyor **252.** Such a delay is required in some instances to keep the pace of the apparatus **200** as deemed required during the operation thereof. The second buffer conveyor **254b** may be in line with the (double) transfer **252,** and substantially perpendicular to the second separator **234.** The second buffer **254b** may be configured to accumulate the rows received onto the (double) transfer conveyor **254.** Such an accumulation by the second buffer **254b** is generally required to improve the capacity of the apparatus by first accumulating a significant number of rows before they are proceeded forward towards the palletizing station **220.**

The pile **202** obtained at the receiving station **210** may first be separated at the first separator **232** to out-feed a plurality of rows which in turn may be infeed towards the second separator **234** to out-feed a plurality of separated bundles towards the (double) side transfer **252.** The first conveyer means 240 may also comprise a buffer mean for accumulating the output of first separator **232.** In other embodiments, of the present invention, the plurality of separators **230** may include any number of additional separators as may deemed suitable in accordance with the working / operations / need of the palletizing apparatus **200.**

Each of the first separator **232,** the second separator **234,** and the third separator **236,** may be a conventionally known separator which may receive piles / rows of bundles to horizontally / vertically separate the infeed to out-feed rows / individual bundles there through. Further, each of plurality of separators **230,** in many embodiments, may be configured to not to perform a separation operation and to simply operate as a buffer conveyor in accordance with the operation of the apparatus **200** and the desired pattern to be formed while stacking.

The apparatus **200** further includes a turning unit **270** for turning orienting one or more of the separated bundles received thereon simultaneously at the same time. The step of orientation is performed by rotating the turning unit **270** horizontally, if desired, at a desired angle, generally in the multiples of 90° and preferably in multiples of 45° degree. For Instance, examples of different angles may include, but are not limited to 90°, 180°, 270°, 360°, and so on. The turning unit **270** is connected to the third separator **236** through a third conveyor means **260.** The third conveyor means **260** is a generally known belt conveyor extending from and between the third separator **236** and the palletizing station **220.**

The apparatus **200** further includes a layer formation unit **280** for forming a layer of the separated bundles according to a desired pattern. The desired pattern may include any known layer patterns including column stacking pattern as well as overlapping pattern. The layer formation unit **280** may be any conventionally known layer formation unit configured to receive the separated bundles at its infeed and arranging together as per the requirements to form a layer in accordance with the desired stacking pattern. The layer formation unit **280** is positioned onto the third conveyor **260** and is connected to the turning unit **270** at one end and extending towards the palletizing station **220.**

In some embodiments, the layer formation stations **280** include an accumulator unit [now shown]. The accumulator unit is configured to accommodate the storage of bundles if required. As an example, if infeed available at the layer formation station **280** is less than the minimum number of bundles required for the layer formation as per the requirements, the bundles of trays are stored in the accumulator unit till the next delivery of the corresponding bundles. In some embodiments, the buffer may be executed by providing a side exit to the infeed bundles to a waiting position. In such instances, the bundles are redirected to infeed upon arrival of new bundles. In some other embodiments, the buffer may be executed by temporarily lifting the infeed bundles using lifting devices such as forks, fingers etc. In such instance, when additional bundles of trays are received at infeed, the lifting device is lowered and the bundles are put on the infeed to enable the layer formation process.

In some embodiments of the present invention, the apparatus **200** further includes a layer loading unit **222** at the palletizing station **220.** The layer loading unit **222** for placing the layers formed at the layer forming unit **222** onto the base pallet **204.** The layer loading unit **222** is positioned onto the third conveyor **260** and is connected to the layer formation unit **280.**

The layer loading unit **222** may include any conventionally known layer stacking mechanism configured to receive the patterned layer at its infeed and placing it onto the base pallet. In a preferred embodiment, the layer loading unit **222** may be a load transfer plate **222,** the transfer plate **222** being adapted to receive layers of bundles from the layer formation unit **270** and loading it onto the base pallet **204.**

Further in such embodiments, where the apparatus **200** is configured to stack the layers on more than one base pallets, the transfer plate **222** may be configured to move between the layer formation unit **270** and the respective base pallet.

In other embodiments, the layer loading unit **222** may include various kind of known automatic solution such as robots, elevators, grippers, and the like suitable to deliver the patterned layer onto the base pallet / previously stacked layer.

The layer loading unit **222** may further include one or more powering components, such as for example, in some cases a motor, or in other examples may be one or more actuating cylinders for enabling a horizontal / vertical movement of the layer loading unit in a forward and / or a backward and / or an upward and / or a downward direction.

In some embodiments of the present invention, the apparatus **200** may further include an aligning unit **282** configured onto the layer formation unit **280** and / or layer loading unit **222** for aligning a layer formed and to be stacked on to the base pallet **204.** The aligning unit **282** can comprise two substantially mirror symmetrical aligning members which are disposed at opposite sides of layer formation unit **280** and / or layer loading unit **222,** and means for jointly moving the aligning members toward and away from each other, preferably through identical distances.

The palletizing apparatus **200** further includes a control unit **190** (depicted in fig. 1 but not shown in fig. 2) for remotely controlling the operations / handling of various components of the palletizing apparatus **200** such as, for example, the receiving station **210,** the plurality of separators **230,** the first conveyor mean **240,** the second conveyor mean **250,** the third conveyor mean **260,** the turning unit **270,** the layer formation unit **280** and the palletizing station **220** of the apparatus **200.** In some embodiments, the control unit **190** includes a data capturing unit for tracking the parameters such as for example, location of the layer to be stacked, loading height of the palletizing station, or the like. The control unit **190** may further include a processor unit for processing the data captured by the data capture unit on the basis of predetermined logics / rules for facilitating the operation within the system. The control unit **190** may further include an instruction unit that delivers the instructions to various components such as various motors, driving units, conveyer means, vertical elevating means and centering frame, or the like, to facilitate a desired and smooth operation in accordance to the desired pattern in which the layers needs to be stacked. The control unit **190** is generally connected to the various components of the apparatus **200** through connection mechanisms such as electric cables, data link cables, or the like.

In some embodiments, the control unit **190** may be provided as a computer program product, such as may include a computer-readable storage medium or a non-transitory machine-readable medium maintaining instructions interpretable by a computer or other electronic device, such as to perform one or more processes. A non- transitory machine-readable medium includes any mechanism for storing information in a form (including a processing application or software) readable or interpretable by a machine (such as a computer). The non-transitory machine-readable medium may take the form of, but is not limited to, any known storage technique, including magnetic storage media, optical storage media, magnetooptical storage media; read only memory (ROM); random access memory (RAM); erasable programmable memory (including EPROM and EEPROM); flash memory; and otherwise.

In an embodiment of the present invention, the control unit **190** may include an automatic mode / preprogrammed unit for automatizing the operation of the palletizing apparatus **200** in accordance with the desired stacking pattern to be achieved for palletizing the layers onto the base pallet.

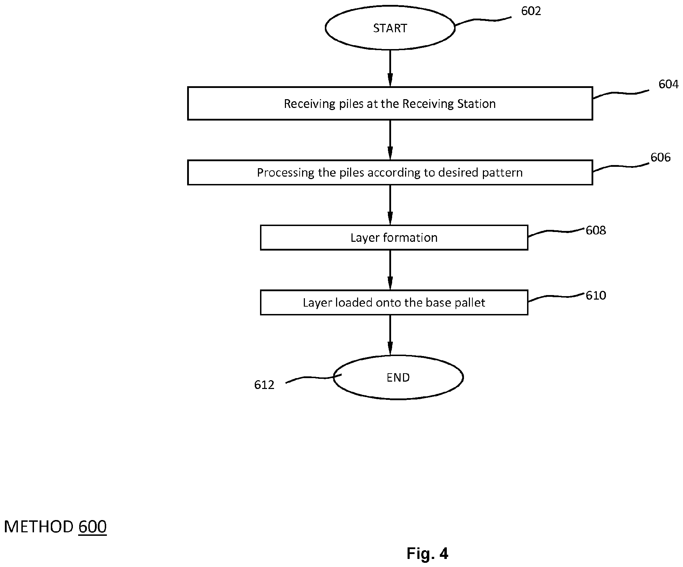

Fig. 4 with reference to Figs.1 and 2, is a flow diagram illustrating a method **600** for layering and then stacking the layers formed from a pile of bundles **202** received at the receiving station **210,** onto the base pallet **204** at the palletizing station **210** using the apparatus **200** of the present invention. The method **600** starts at step **602** and moves to step **604** where one or more piles of bundle **202** is received at the receiving station **210.** Thereafter, the one or more piles of bundle **202** is processed at step **606** by moving the bundle from receiving station **210** through the plurality of separators **230,** the first conveyor means **240** and the second conveyor means **250** towards the turning unit **270.** The processing of the piles of bundles includes separation and / or accumulation if required while moving towards the turning unit **270.** This movement / separation / accumulation / handling of the pile of bundles **202** is controlled by the control unit **190** in accordance to the desired stacking pattern to be obtained.

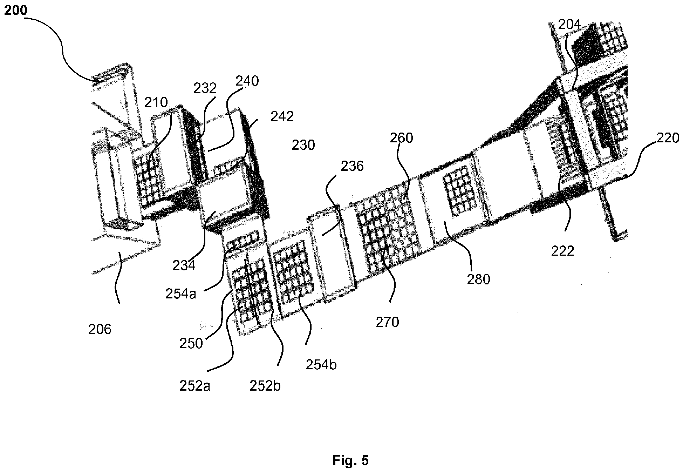

For example, in some embodiments as illustrated in Fig. 5, to achieve a column stacking, the first separator **232** may be configured to not to perform the separation action. In that case, the one or more pile of bundles **202** is forwarded to the second separator **232** through the first side conveyor **240** such that piles when separated forms a plurality of columns and is receivable onto the double transfer **252a and 252b** as plurality of rows still nicked together. Thereafter, each of these rows are forwarded towards the third separator **236** where each of the rows are separated and then forwarded towards the turning unit **270** where the individual bundles received may be turned together and forwarded towards the layering unit 280. In all such embodiments, one or more rows may be accumulated on the buffer conveyors **254a** and/or **254b** for allowing smooth movement / handling of the rows towards the turning unit **270.** Further, the number of rows / piles etc. may be decided on the basis of the exact column stacking pattern to be obtained.

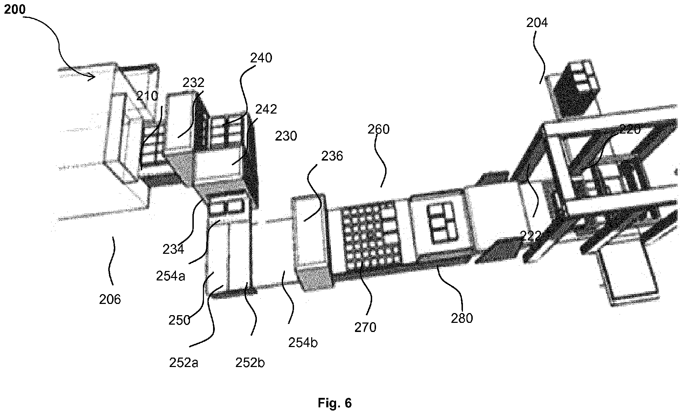

Alternatively, in some embodiments as illustrated in Fig. 6, to achieve an overlapping pattern stacking, the one or more pile of bundles **202** is forwarded to the first separator **232** which separates the pile of bundles 202 to a plurality of rows. Thereafter, one or more of the plurality of rows are forwarded to the second separator **234** through the first side conveyor **240** such that when separated out feeds separated individual bundles receivable onto the double transfer **254** such that each of the separated bundles of a common row may be received onto one of the separate single transfer **254a** and / or **254b.** Thereafter, the separated rows received onto the single transfer **254a** and / or **254b** are forwarded towards the third separator **236** and to the turning unit **270** individually and / or simultaneously and / or sequentially, in accordance with the kind of overlapping pattern to be achieved. Further, the turning unit **270** is configured to perform the turning action for separated bundles individually and / or simultaneously and / or sequentially, in accordance with the kind of overlapping pattern to be achieved. In all such embodiments, one or more rows and / or separated bundles may be accumulated on the buffer conveyors **254a** and/or **254b** for allowing smooth movement / handling of the rows towards the turning unit **270.** Further, the number of rows / piles / bundles etc. may be decided on the basis of the exact overlapping stacking pattern to be obtained. Using the above disclosed method various kind of overlapping patterns may be obtained.

Looping back to method **600,** Once the bundles are received and turned at the turning unit **270,** the method proceeds to step **608,** where the separated bundles are forwarded to the layering unit **280,** layered together and if required, aligned to form a stacking layer which is then transferred to the palletizing station **204** and loaded onto the base pallet using layer loading unit **222** at step **610.**

In some embodiments, the alignment of the layer of bundles may be performed along with the step of layer formation. However, in some other embodiments, the step of alignment may be performed after layers are formed and transferred to the palletizing station **220** or while being transferred to the palletizing station **220** depending upon the position of the aligning unit within the apparatus **200**

Preferably, all the steps of method **600** may be executed using the control unit from a remote place. In another embodiment, the control unit may be configured to work automatically without any intervention from an operator or a user. Accordingly, the apparatus **200** processes a pile of article to be stacked onto the base pallet **204** in such a way that more than one bundle may be processed, i.e. separated and / or accumulated and / or turned / and or handled simultaneously at the same time.

Such a palletizing apparatus **200** while being faster than the previously available mechanisms allows the possibility of stacking small size bundles as well as large size bundles in all possible patterns such as including column stacking pattern and various overlapping stacking patterns. Further, the stack thus formed onto the base pallet are properly aligned thereby avoiding a possibility of any damage to the stacks during shipment and / or transportation.

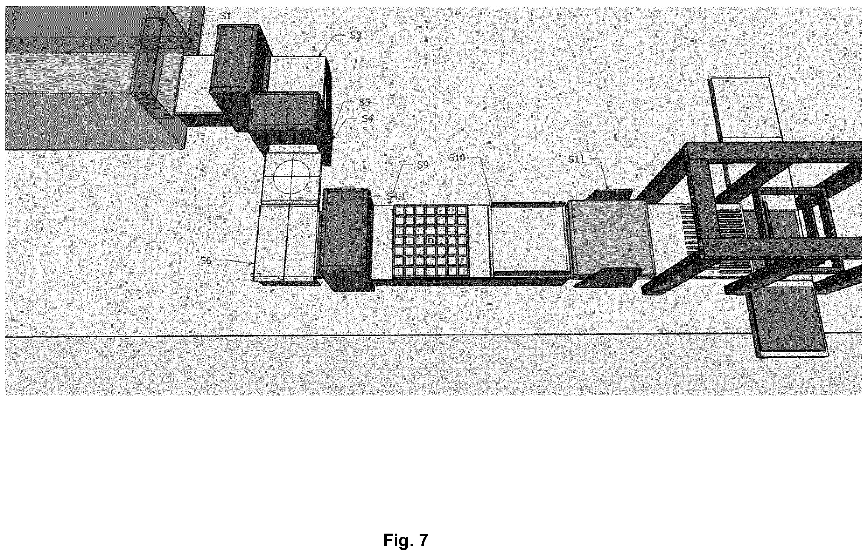

In addition, in FIG. 7 a specific embodiment of the palletizing apparatus of the present invention is illustrated which enables several Modus Operandi as explained in the remaining paragraphs and which enables processing of bundles of small sizes in column stacking, as well as bundles of larger sizes in overlapping patterns.

The palletizing apparatus as further explained is installed behind die cutters and can form a multitude of patterns. One of the few limitations is that the standard palletizing apparatus starts from the concept that all the die cut trays are oriented the same way and will therefore not be turned individually to reorient them. The only time the palletizing apparatus deals with opposite oriented die cuts is with interlocked shapes or similar (such as L shapes for auto lock bottoms) in which case the palletizing apparatus keeps them together after separation in the same orientation as in the die.

The palletizing apparatus may enable several Modi Operandi as illustrated by means of Fig. 7:

### First modus operandi:

Overlapping patterns:, forming fast layers with separated bundles coming from S4 going and over conveyors S6/7 and 8 utilizing the double drive positioning device S9. In this case, the 3rd separator S4.1 is only used as a transport /buffer conveyor.

### Second modus operandi:

Small bundle column stacking: full piles as they come from the die cutter are not separated in rows with S2, but sent directly to 90° transfer S3. Sep S4 will separate rows across the die and send them over double side transfer S6/7 handing over to S4.1 which will now separate them into little bundles. The number of requested rows is buffered on S6/7 and also on S8, forming a full layer. The turn disc between S9 and S10 can now turn the whole layer at once if requested. This way both small bundles in column stacking and larger trays in overlapping patterns can be executed at the highest of capacities.

### Third modus operandi:

"T"-shaped trays in uneven numbers: by using a turntable onS5, every last uneven T-shaped tray will be turned 180° so that it fits the first tray of the next pile of T-shaped trays coming from the die cutter. This allows to then form layers with an even number of trays. To achieve this, the palletizing apparatus will use always only but one row into separator S4.

### Fourth modus operandi:

Row turning: Full rows are turned 180° on S9. This is applicable when full rows of trays are opposite toward other rows in the same die, as some examples received.

### Fifth modus operandi:

Flex programming: When using a turntable in S5, it is possible to turn any individual bundle 90+/90-or 180°, forming rows on S6/7, which are then added to each other in S10. This allows to orient specific bundles to the outside of a pattern and more similar approaches. While this offers a large degree of flexibility, it will reduce the capacity of the palletizing apparatus in a significant way as only one row at the time is passed through the separator S4 and possibly many bundles are to be turned individually.

The operator can choose to use the end stop plates on positions S5 and S8 or not, to realign the bundles. (Utilizing stop plates slows down the throughput of the palletizing apparatus, and may not be working with certain odd shapes, and is only useful with low quality of stacks which should be avoided anyway).

The finished layer is now moved to the center of the layer turner, S11, which can turn that particular layer upside down, by clamping the layer between two plastic belt conveyors, utilizing a chosen pressure. The layer turner can turn every other layer, or all layers.

The layer will now be forwarded to the layer elevator in S15. The layer loader palletizing apparatus works with 2 individual sets of fingers. Additional tampering fingers are foreseen which are working in the opposite direction of the centering plates, so that the layer is in fact centered from all 4 directions. These additional tampering fingers need manual adjustment with the start of a new order, yet there is easy access to it as the elevator is at working level at that moment. When the layer is centered, the fingers are retracted, dropping the layer over a small height onto the previous layer, or an empty pallet, or a bottom sheet. The centering plates cover also a part of the previous layer, resulting in a better load quality. A special feature ensures that even the first layer of a load is perfectly centered in all directions.

Whenever instructed by the program, the tie sheet feeder (not shown) will pick up a sheet from a pile (not shown) and place that sheet in the center of the layer onto the layer in position S10.

Whenever a bottom sheet is requested, S19 will pick it up and place it in the middle of S18. The bottom sheet will be fed onto the load conveyor S16 at the same time as the finished load is transferred to S21.

Optionally, crossed bottom sheets can be prepared on S18, by placing one sheet on the conveyor or the empty pallet and then place a second bottom sheet above it (turned 90° in the horizontal plane).

Optionally, it is also possible to take two different sizes of bottom sheets from two different piles and built an adapted stack of sheets by utilizing the drive motor from S18, allowing for a sideways displacement of the crossed sheet.

A general comment for both tie and bottom sheet feeder: the palletizing apparatus detects when there are only a few sheets remaining on the stack of sheets, so that the operator gets an early warning to add sheets, thus avoiding an interruption of the production.

In case of interlocked bundles, special tray shapes are produced, having somewhat of an "L" shape, whereby 2 such trays are mirrored and interlocked in the die, to save material. These nested trays can be separated up to an overlap of 200 mm, but will be kept together to form a pattern as they were in the die.

While column stacking is often the majority of requested patterns, the palletizing apparatus in accordance with the present invention can form many different overlapping patterns, and does so in a very efficient way as explained in the following paragraphs:

Stacks of sheets containing "nicked together" products are received from the die-cutter on S1, which will feed the stack into separator S2. The stack will be positioned in the Separator so that the first separation line is perfectly in the middle of the separator, upon which the clamping beams come down a first time slowly towards the top of the stack, until the requested clamping pressure is reached. Then the second part of the separator pivots upwards, separating the first row via an electrically driven eccentric motion, reducing the needed power, handling the products in a gentle way.

When the pivoting part is back down in its original position, the separated row is forwarded to S3, while simultaneously the remaining part of the stack is forwarded into the separator until the next separation line, upon which the cycle is repeated. If there are no further separation lines in the stack, the palletizing apparatus will detect this, and will automatically forward the separated rows onto S3.

In position S3, depending on the product size in feed direction in the die, either 1 or 2 rows will be accumulated. If the products size in feed direction is smaller than half of the working width of the third separator S4 (675mm), two rows will be accumulated in the middle of S3. If the product size is bigger than this dimension, only one row will be forwarded to the center of the position S3.

S3. will transfer the row(s) in 90° direction to the separator S4., which has the identical function as separator S2., but separating bundles in the across direction of the die. Also, here the separator will recognize the last separation line.

Separated bundle(s) are buffered in S5, whereby the operator can choose to use the end stop plate or not, to realign the bundle. Utilising stop plates slows down the throughput of the system, and may not be working with certain odd shapes, and is only useful with low quality of stacks (which should be avoided anyway).

Depending on the requested pattern and bundle size, the double side transfer S6 and S7 will either work together as one large side transfer or as two individual side transfers. For description purposes, we will assume that 2 bundles (smaller than 675mm in the feed direction) will be used.

S5 will forward the 2 bundles onto the two side transfers S6 and S7, each of which will position the bundle at a requested position, which is depending on both the requested pattern and the box size.

Also, is it possible that several bundles are accumulated on S6 and S7.

These bundles will be transferred to search conveyor S8, utilising or not - the stop plate, and then further towards the double drive positioning device S9, which might turn the pre-positioned bundles in any chosen direction so that the bundles are in the correct location for the requested pattern.

When all bundles are available and positioned, they are collected in S10, which will center the bundles across the conveyor with two centering plates, creating nicely aligned layers.

### INDUSTRIAL APPLICABILITY

The present disclosure relates to a palletizing apparatus **200** for stacking plurality of layers of bundles of various size including very small size bundles of the range 140x140 onto a base pallet. The apparatus may be used preferably in the corrugated box manufacturing industries for palletization of very small size boxes. However, the palletizing apparatus **200** may be used for improvising the stacking in various industries including but not limited to industries related to such as food items, tiles, compact disks (CDS) or other relatively flat products.

Since the palletization apparatus 200 may separate as well as accumulate bundles / rows / piles to be stacked in accordance with the pattern to be obtained therefore is adapted to be used in forming different kind of stacks depending upon the kind of article to be stacked. Accordingly, the apparatus **200** may be used within various manufacturing plants at the end of a bottling, canning or packaging machine which places articles in layers / boxes / cartons, which are then stacked onto pallets for ready shipment.

The palletizing apparatus **200** of the current invention while being applicable for small size as well as large size, is far more efficient than the previously available palletization mechanisms. Further, the palletizing apparatus of the current invention is very simple to execute and may be incorporated into existing manufacturing / production plants etc., thereby avoiding any addition of huge costs. The palletizing apparatus may accordingly be adapted the apparatus in part or as a whole in currently manufacturing plants.

Referring to Figs. 6-8, methodology in accordance with a preferred embodiment of the claimed subject matter is illustrated. While, for purposes of simplicity of explanation, the methodology is shown and described as a series of acts, it is to be understood and appreciated that the claimed subject matter is not limited by the order of acts, as some acts may occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the claimed subject matter. Additionally, it should be further appreciated that the methodologies disclosed hereinafter and throughout this specification are capable of being stored on an article of manufacture to facilitate transporting and transferring such methodologies to computers. The term article of manufacture, as used herein, is intended to encompass a computer program accessible from any computer-readable device, carrier, or media.

Throughout the specifications of the present disclosure, the term "comprising" means including but not necessarily to the exclusion of other elements or steps. In other words, the term comprising indicates an open list. Furthermore, all directional references (such as, but not limited to, upper, lower, inner, outer, upward, downward, inwards, outwards, right, left, rightward, leftward, inside, outside, top, bottom, above, below, vertical, horizontal, clockwise, and counter=clockwise, lineal, axial and/or radial, or any other directional and/or similar references) are only used for identification purposes to aid the reader's understanding of illustrative embodiments of the present disclosure, and may not create any limitations, particularly as to the position, orientation, or use unless specifically set forth in the claims. Moreover, all directional references are approximate and should not be interpreted as exact, but rather as describing a general indicator as to an approximate attitude.

Similarly, joinder references (such as, but not limited to, attached, coupled, connected, accommodated, and the like and their derivatives) are to be construed broadly and may include intermediate members between a connection of segments and relative movement between segments. As such, joinder references may not necessarily infer that two segments are directly connected and in fixed relation to each other.

In some instances, components are described with reference to "ends" having a particular characteristic and/or being connected with an-other part. However, those skilled in the art will recognize that the present disclosure is not limited to components which terminate immediately be-yond their points of connection with other parts. Thus, the term "end" should be interpreted broadly, in a manner that includes areas adjacent, rearward, forward of, or otherwise near the terminus of a particular segment, link, component, part, member or the like. Additionally, all numerical terms, such as, but not limited to, "second", "second", "third", "fourth", or any other ordinary and/or numerical terms, should also be taken only as identifiers, to assist the reader's understanding of the various embodiments, variations and/or modifications of the present disclosure, and may not create any limitations, particularly as to the order, or preference, of any embodiment, variation and/or modification relative to, or over, another embodiment, variation and/or modification.

As will be readily apparent to those skilled in the art, the present invention may easily be produced in other specific forms without departing from its essential characteristics. The present embodiments are, therefore, to be considered as merely illustrative and not restrictive, the scope of the invention being indicated by the claims rather than the foregoing description, and all changes which come within therefore intended to be embraced therein. Many variations, modifications, additions, and improvements are possible. More generally, embodiments in accordance with the present disclosure have been described in the context of preferred embodiments. Functionalities may be separated or combined in procedures differently in various embodiments of the disclosure or described with different terminology. These and other variations, modifications, additions, and improvements may fall within the scope of the disclosure as defined in the appended claims.

## Claims

1. A palletizing apparatus, wherein when a pile of plurality of bundles to be stacked is received, the pile is processed and passed towards the layer formation unit such that more than one bundle may be separated and / or accumulated and / or turned simultaneously at the same time in accordance with the desired layer stacking pattern, said apparatus comprising:
- a receiving station for receiving the pile of plurality of bundles and connected to a palletizing station;
- a plurality of separators arranged and sequentially connected between the receiving station and the palletizing station, said plurality of separating means comprising: a first separator (132, 232) extending towards and between the receiving station and a first side transfer conveyor; a second separator (134, 234) connected to the first separator through a first conveyor mean including at least the first side transfer conveyor; and a third separator (136, 236) connected to the second separator through a second conveyor means extending towards the palletizing station, the second conveyor means comprising a side transfer conveyor and one or more buffer conveyors;
- a turntable unit for changing the orientation of one or more separated bundles received thereon, the turn table unit connected to the third separator through a third conveyor mean extending between the third separator and the palletizing station;
- a layer formation unit for receiving the one or more separated bundles and forming a desired layer stacking pattern, the layer formation unit extending between the turn table unit and the palletizing station.

2. The apparatus of claim 1, wherein at least one of the plurality of separators is configured to not to perform the separating operation.

3. The apparatus of claim 2, wherein the configured separator is the first separator.

4. The apparatus of claim 1, wherein the side transfer conveyor is a double side transfer conveyor.

5. The apparatus of claim 1, wherein the receiving station is connected to a die-cutter, preferably, a flat-bed die cutter.

6. The apparatus of claim 1, wherein the first conveyor means and the second conveyor means comprising an automatic conveyor.

7. The apparatus of claim 1, wherein the apparatus further comprising an aligning unit extending between the layer forming unit and the palletizing station.

8. the apparatus of claim 1, wherein the palletizing station comprising a layer loading unit for loading the patterned bundle onto the pallet.

9. The apparatus of claim 1, further comprising a control unit for remotely controlling the operations and / or processing and / or stacking the separated bundles in accordance with the desired layer pattern.

10. The apparatus of claim 9, wherein the control system comprises a data capturing unit for tracking the location of a feed; a processor unit for processing the data received and an instructor unit for delivering handling/operation instructions to the palletizing system.

11. A method for palletizing using the apparatus according to any of proceeding claims, the method comprising:
- receiving one or more pile of bundles at a receiving station towards the palletizing station;
- processing the one or more piles of bundle to receive the separated bundles at the layer formation unit to form a desired layer pattern; and
- stacking the patterned bundles onto the pallet
wherein the one or more piles of the bundles is processed to stack the separated bundles into a desired pattern wherein further more than one bundle may be processed simultaneously at the same time.

12. The method of claim 11, further comprising the step of aligning patterned layer using an aligning unit extending between the layer forming unit and the palletizing station.

13. The method of claim 11, wherein the step of processing comprises separating using the plurality of separators and / or accumulating on the one or more accumulators and / or turning on the turning unit.

14. The method of claim 11, wherein the method comprising a control unit for remotely controlling the operations and / or processing and / or stacking the separated bundles in accordance with the desired layer pattern.

15. The method of claim 14, wherein the control unit comprises a data capturing unit for tracking the location of a feed; a processor unit for processing the data received and an instructor unit for delivering handling/operation instructions to the palletizing system.
